# EUROPÄISCHE PATENTSCHRIFT

(11) **EP 3 990 791 B1**
(45) Veröffentlichungstag und Bekanntmachung des Hinweises auf die Patenterteilung: **12.07.2023**
(21) Anmeldenummer: 20728930.7
(22) Anmeldetag: 18.05.2020
(51) Int. Cl.: F16C 19/22, F16C 19/52, F16C 41/00, F16C 19/36, F16C 19/38, F16C 33/58

(54) **ROLLENLAGERANORDNUNG ZUM BESTIMMEN VON BELASTUNGEN**
ROLLER BEARING ASSEMBLY FOR DETERMINING LOADS
ASSEMBLAGE DE ROULEMENTS À ROULEAUX POUR LA DÉTERMINATION DE CHARGES

(30) Priorität: 25.06.2019 DE 102019116999
(43) Veröffentlichungstag der Anmeldung: 04.05.2022
(73) Patentinhaber: Schaeffler Technologies AG & Co. KG, 91074 Herzogenaurach (DE)
(72) Erfinder: NEUGEBAUER, Benedikt, 97532 Üchtelhausen (DE); HEIM, Jens, 97493 Bergrheinfeld (DE); HORNUNG, Marco, 96191 Viereth-Trunstadt (DE)
(86) Internationale Anmeldenummer: PCT/DE2020/100431
(87) Internationale Veröffentlichungsnummer: WO 2020/259741

(56) Entgegenhaltungen:
- WO-A1-2018/219379
- DE-A1-102008 016 592
- DE-A1-102014 204 025

## Beschreibung

Die Erfindung betrifft eine Rollenlageranordnung zum Bestimmen von Belastungen.

Im Allgemeinen werden die Belastungen, denen beispielhaft eine Rollenlageranordnung einer Windenergieanlage im Laufe ihres Betriebs ausgesetzt ist, nicht aufgezeichnet. Daher ist die Belastungshistorie von Windenergieanlagen daher meist unbekannt. Lastmessungen erfolgen häufig lediglich an Prototypenanlagen als Teil der Zertifizierung. Allerdings ist ein Übertrag der Auslegungs- und Prototypenlasten auf Serienanlagen nicht ohne weiteres möglich, da standortabhängige Einflüsse nicht bekannt/ übertragbar sind. Dies können beispielhaft Effekte sein mit Bezug auf Windfeld, Windpark-Effekte oder auch Betriebsstrategie je nach Netzqualität.

Für allgemeine Wälzlager gibt es bereits Ansätze einer permanenten Bestimmung der Belastung. So ist in der Offenlegungsschrift DE 10 2014 204 025 A1 ein Bauteil mit einem wenigstens einen Sensor aufweisenden Messelement offenbart. Dabei ist das Bauteil beispielhaft als Wälzlager ausgebildet. Konkret sieht die Lösung dieser Offenlegungsschrift ein Bauteil vor mit einer Materialausnehmung und einem wenigstens einen Sensor aufweisenden Messelement, das kraftschlüssig in die Materialausnehmung eingepasst ist, wobei der Sensor derart an oder auf dem Messelement angeordnet ist, dass die Messrichtung des Sensors im Wesentlichen mit der Wirkungslinie des Druckwinkels übereinstimmt.

Ein Druckwinkel ist der Winkel zwischen der Radialebene und der Drucklinie, wobei die Lage der Drucklinie stark von verwendeten Wälzkörpern und Rollbahnen abhängig ist.

Allerdings hat sich für die Anwendung an Rollenlagern herausgestellt, dass das Maximum der Pressungsverteilung aus konstruktiven Gründen oftmals nicht in der Mitte der Laufbahn liegt, was der Wirkungslinie des Druckwinkels entspricht. Damit ist die Lehre der Offenlegungsschrift nicht zuverlässig auf Rollenlager anwendbar.

Die DE 10 2014 204 025 A1 beschreibt eine Anordnung zum Bestimmen von Belastungen an einem Rollenlager mit einem Kraftmessbolzen in einer Ausnehmung.

Die DE 10 2017 111 745 A1 beschreibt eine Wälzlageranordnung mit einem Sensorelement, das in einem Kraftflusspfad der Lagervorspannung des Wälzlagers angeordnet ist.

Es ist daher Aufgabe der Erfindung, eine Rollenlageranordnung mit einer verbesserten Belastungsmessung zu schaffen.

Die Lösung der Aufgabe erfolgt erfindungsgemäß durch eine Rollenlageranordnung mit den Merkmalen des unabhängigen Anspruchs. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Erfindung betrifft somit eine Rollenlageranordnung zum Bestimmen von Belastungen an einem Rollenlager, aufweisend ein Rollenlager mit zwei koaxialen Ringen, nämlich einem Innenring und einem Außenring, und mit einer Drehachse, wobei zwischen dem Innenring und dem Außenring eine Vielzahl von Rollen mit einer jeweiligen Rotationsachse angeordnet ist, und wobei zumindest einer der Ringe zumindest eine Ausnehmung zur Aufnahme eines Kraftmessbolzens aufweist, zumindest einen Kraftmessbolzen, der jeweils in der Ausnehmung aufgenommen ist, wobei sich der in der Ausnehmung angeordnete Kraftmessbolzen mit seiner Längsachse zumindest teilweise entlang der Drehachse des Rollenlagers erstreckt, sich eine Achse des Druckwinkels mindestens einer Rolle nicht mit dem Maximalbereich einer Belastung deckt, wobei sich die zumindest eine Ausnehmung und der mindestens eine Kraftmessbolzen entlang der Längsachse in einen mit einer Belastung beaufschlagten Bereich des die mindestens eine Ausnehmung aufweisenden Rings derart erstrecken, dass zumindest eine zur Rotationsachse der Rollen senkrechte Projektionsvertikalebene entlang dem Kraftmessbolzen und einem Maximalbereich der Belastung verläuft.

Grundidee der Erfindung ist es somit, dass die zumindest eine Ausnehmung und der mindestens eine Kraftmessbolzen entlang der Längsachse derart angeordnet sind, dass sie eine Projektionsvertikalebene durch den Maximalbereich der Belastung bilden. Wesentlich ist somit nicht die Position des Druckwinkels, da dieser bei Rollenlagern nicht stets durch den Maximalbereich der Belastung verläuft. Stattdessen wird fallabhängig der den Maximalbereich der Belastung individuell erkannt und die zumindest eine Ausnehmung und der mindestens eine Kraftmessbolzen entsprechend angeordnet. Dies ermöglicht eine zuverlässige Detektion der auf das Rollenlager wirkenden Belastungen.

Die Projektionsvertikalebene ist nach alledem unabhängig von der Wirkungslinie des Druckwinkels.

Ein Rollenlager ist vorzugsweise sowohl in radialer als auch in axialer Richtung sehr hoch belastbar. Es wird in der Regel paarweise eingebaut: Beispielhaft werden zwei Kegelrollenlager gegeneinander angestellt, denn Kegelrollenlager bestehen aus zwei losen Elementen: dem Innenring mit Kegelrollen als Wälzkörpern, und dem Außenring als Lagerschale. Die Kegelrollen auf dem Innenring haben die Form eines Kegelstumpfes, außerdem sind sie etwas gegen die Drehachse geneigt. Das Spiel ist einstellbar. Die Kegelspitzen, und beliebige Erzeugende der Kegelmäntel, von Innenring, Außenring und aller Rollen treffen sich in einem Punkt auf der Drehachse, denn dann können die Rollen ohne Schlupf abrollen.

Als Rollenlager werden im Sinne der Erfindung neben dem beispielhaft erwähnten Kegelrollenlager auch Pendelrollenlager, Zylinderrollenlager und ähnlich wirkende Lager verstanden.

Gemäß einer bevorzugten Ausführungsform der Erfindung ist vorgesehen, dass das Rollenlager an mindestens einem Ring, vorzugsweise beiden Ringen, eine Vielzahl von in Ausnehmungen angeordneten Kraftmessbolzen aufweist, wobei vorzugsweise mindestens zwei in den Ausnehmungen angeordnete Kraftmessbolzen entlang ihrer Längsachse unterschiedlich lang ausgebildet sind, wobei bevorzugt mindestens zwei in den Ausnehmungen angeordnete Kraftmessbolzen an einem jeweiligen Ring umfangsgemäß verteilt angeordnet sind. Je mehr Kraftmessbolzen vorhanden sind, desto genauere Messungen können erfolgen. Die unterschiedlichen Längen ermöglichen, unterschiedlich in die Belastungsbereiche detektierend einzugreifen. Hierzu ist insbesondere eine umfangsgemäß gleichmäßige Verteilung bevorzugt.

Die mindestens eine Ausnehmung, vorzugsweise mehrere Ausnehmungen, zur Aufnahme jeweils eines Kraftmessbolzens kann oder können insbesondere an einer Stirnfläche oder beiden Stirnflächen des Innenrings und/oder des Außenrings angeordnet sein. Möglich ist jedoch auch, dass die mindestens eine Ausnehmung, vorzugsweise mehrere Ausnehmungen, zur Aufnahme jeweils eines Kraftmessbolzens an der Mantelfläche des Innenrings und/oder des Außenrings angeordnet ist oder sind.

Gemäß einer bevorzugten Ausführungsform der Erfindung ist vorgesehen, dass die zumindest eine Ausnehmung zur Aufnahme eines Kraftmessbolzens in einem zum Umfeld fixierten Ring angeordnet ist. Dies ermöglicht eine Messung mit leichten Mitteln. Insbesondere können Kabel verwendet werden, wohingegen bei einem zum Umfeld drehbaren Ring eine Telemetrieverbindung benötigt würde. Ein zum Umfeld fixierter Ring ist jene Ring eines Rollenlagers, der zu seinem Umfeld fest steht. Es entspricht dem Prinzip eines Wälzlagers, dass ein Ring einen Rotationskörper drehbar lagert und der andere Ring ein zum Umfeld fixierter Ring ist.

Gemäß einer bevorzugten Ausführungsform der Erfindung ist vorgesehen, dass an mindestens einem Ring mindestens vier Kraftmessbolzen derart angeordnet und ausgebildet sind, dass jeweils zwei Kraftmessbolzen zueinander gegenüberliegend entlang einer jeweiligen diagonalen Achse an dem mindestens einen Ring angeordnet sind, wobei die beiden diagonalen Achsen vorzugsweise derart verlaufen, dass eine diagonale Achse eine horizontale Achse ist und/oder die andere diagonale Achse eine vertikale Achse ist. Dies ermöglicht eine gute Verteilung der Kraftmessbolzen und somit gute Messergebnisse. Die Anordnung, dass eine diagonale Achse eine horizontale Achse ist und/oder die andere diagonale Achse eine vertikale Achse ist kann interpretiert werden mit horizontal als über den Horizont erstreckend und mit vertikal als zum Erdmittelpunkt weisend. Anders formuliert entspricht diese Anordnung beispielhaft an einer Uhr den Zeiten 12, 15, 18 und 21 Uhr.

Gemäß einer bevorzugten Ausführungsform der Erfindung ist vorgesehen, dass die mindestens beiden Kraftmessbolzen entlang der als horizontale Achse ausgebildeten diagonalen Achse entlang ihrer Längsachse die gleiche Länge aufweisen und/oder dass die mindestens beiden Kraftmessbolzen entlang der als vertikale Achse ausgebildeten diagonalen Achse entlang ihrer Längsachse die gleiche Länge aufweisen. Es hat sich herausgestellt, dass dies gute Messergebnisse ermöglicht. Weiterhin können etwaige Messfehler detektiert und berücksichtigt werden.

Gemäß einer bevorzugten Ausführungsform der Erfindung ist vorgesehen, dass die Länge des mindestens einen Kraftmessbolzens entlang seiner Längsachse von den mechanischen Eigenschaften des Rings abhängt, wobei die Länge des mindestens einen Kraftmessbolzens entlang seiner Längsachse bei einem Ring mit hoher Steifigkeit länger ausgebildet ist als bei einem Ring mit niedriger Steifigkeit. Es hat sich herausgestellt, dass dies gute Messergebnisse ermöglicht.

Gemäß einer bevorzugten Ausführungsform der Erfindung ist vorgesehen, dass die Längsachse mindestens eines Kraftmessbolzens, vorzugsweise mehrerer Kraftmessbolzen, gewinkelt, insbesondere 45 Grad, zur Drehachse des Rollenlagers angeordnet ist beziehungsweise sind. Es hat sich herausgestellt, dass dies gute Messergebnisse ermöglicht.

Gemäß einer bevorzugten Ausführungsform der Erfindung ist vorgesehen, dass die Längsachse mindestens eines Kraftmessbolzens, vorzugsweise mehrerer Kraftmessbolzen, derart gewinkelt zur Drehachse des Rollenlagers angeordnet ist beziehungsweise sind, dass die Längsachse mindestens eines Kraftmessbolzens, vorzugsweise mehrerer Kraftmessbolzen parallel zur Rotationsachse der Rollen angeordnet ist beziehungsweise sind. Es hat sich herausgestellt, dass dies bei großen Druckwinkeln, beispielsweise bei 45 Grad, sinnvoll ist und gute Messergebnisse ermöglicht.

Gemäß einer bevorzugten Ausführungsform der Erfindung ist vorgesehen, dass die Längsachse mindestens eines Kraftmessbolzens, vorzugsweise mehrerer Kraftmessbolzen, parallel zur Drehachse des Rollenlagers angeordnet ist beziehungsweise sind. Es hat sich herausgestellt, dass Ausnehmungen parallel zur Drehachse des Rollenlagers gut in den jeweiligen Ring eingearbeitet werden können und dass Kraftmessbolzen gut in entsprechende Bohrungen eingefügt werden können. Weiterhin droht kein Herausfallen bei einer ungünstigen Positionierung der Ausnehmung durch eine Gewichtskraft des Kraftmessbolzens.

Weiterhin betrifft die Erfindung ein Rollenlager für eine vorgenannte Rollenlageranordnung, gekennzeichnet durch die Merkmale des Rollenlagers, insbesondere der mindestens einen Ausnehmung nach mindestens einem der vorhergehenden Ansprüche.

Gemäß einer bevorzugten Ausführungsform der Erfindung ist vorgesehen, dass der Kraftmessbolzen bezüglich der Drehachse abhängig von einer Position eines Maximums einer Pressungsverteilung zwischen dem Innenring und dem Außenring und abhängig von einer umfangsgemäßen Position des Kraftmessbolzens ausgerichtet und angeordnet ist.

Gemäß einer bevorzugten Ausführungsform der Erfindung ist vorgesehen, dass zumindest vier Kraftmessbolzen über einen Umfang verteilt an zumindest einem Ring umfangsverteilt beabstandet angeordnet sind.

Gemäß einer bevorzugten Ausführungsform der Erfindung ist vorgesehen, dass vier Kraftmessbolzen über einen Bogenwinkel von 90 Grad am Umfang eines Rings umfangsverteilt beabstandet angeordnet sind. Gemäß einer diesbezüglich besonders bevorzugten Ausführungsform der Erfindung ist vorgesehen, dass zwei der vier Kraftmessbolzen auf einer stirnseitig am Rollenlager horizontal verlaufenden Gerade angeordnet sind und zwei der vier Kraftmessbolzen auf einer stirnseitig am Rollenlager vertikal verlaufenden Gerade angeordnet sind.

Gemäß einer bevorzugten Ausführungsform der Erfindung ist vorgesehen, dass zumindest zwei Kraftmessbolzen umfangsverteilt an einem der Ringe angeordnet sind, wobei die Kraftmessbolzen unterschiedlich lang ausgebildet sind, wobei bevorzugt die zumindest zwei Kraftmessbolzen in unterschiedlichen Tiefen innerhalb der jeweiligen Ausnehmung angeordnet sind.

Gemäß einer bevorzugten Ausführungsform der Erfindung ist vorgesehen, dass zumindest zwei Kraftmessbolzen umfangsverteilt an einem der Ringe angeordnet sind, wobei jeweils zwei voneinander über einen Bogenwinkel von 180 Grad beabstandete Kraftmessbolzen gleich lang ausgebildet sind,
wobei bevorzugt vier Kraftmessbolzen umfangsverteilt über einen Bogenwinkel von 90 Grad beabstandet an einem der Ringe angeordnet sind und alle vier Kraftmessbolzen gleich lang ausgebildet sind.

Gemäß einer bevorzugten Ausführungsform der Erfindung ist vorgesehen, dass der zumindest eine Kraftmessbolzen sich mit seiner Längsachse parallel zu einer Laufbahn des Innenrings und/oder Außenrings erstreckt,
wobei das Rollenlager bevorzugt einen Druckwinkel zwischen einer Radialebene und einer Drucklinie von 30 Grad bis 90 Grad, besonders bevorzugt von 45 Grad bis 90 Grad aufweist.

Gemäß einer bevorzugten Ausführungsform der Erfindung ist vorgesehen, dass der zumindest eine Kraftmessbolzen unter Berücksichtigung einer Belastung der Lauffläche so nah wie möglich an der Laufbahn angeordnet ist,
wobei bevorzugt der mindestens eine Kraftmessbolzen umso kürzer ausgebildet ist, je näher er an der Lauffläche angeordnet ist.

Gemäß einer bevorzugten Ausführungsform der Erfindung ist vorgesehen, dass der zumindest eine Kraftmessbolzen umso länger ausgebildet ist, je steifer ein die Ausnehmung umgebendes Material ausgebildet ist, und umso kürzer ausgebildet ist, je weicher das die Ausnehmung umgebende Material ausgebildet ist.

Gemäß einer bevorzugten Ausführungsform der Erfindung ist vorgesehen, dass der zumindest eine Kraftmessbolzen nach dem Funktionsprinzip eines Dehnungsmessstreifens ausgebildet ist,
wobei bevorzugt der zumindest eine Kraftmessbolzen an einem zum Umfeld stehenden Ring des Rollenlagers angeordnet ist.

Gemäß einer bevorzugten Ausführungsform der Erfindung ist vorgesehen, dass der zumindest eine Kraftmessbolzen in einem beweglichen Ring des Rollenlagers angeordnet ist. Bevorzugt weist die Rollenlageranordnung eine Vorrichtung zur verbindungsfreien Datenübertragung auf. Dies ist insbesondere eine Telemetrieverbindung.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: Rollenlageranordnung mit einem einreihigen Rollenlager und mit zwei unterschiedlich lang ausgebildeten Kraftmessbolzen gemäß einer ersten Ausführungsform der Erfindung und
Fig. 2: Rollenlageranordnung mit einem zweireihigen Rollenlager und mit zwei parallel zur jeweiligen Rotationsachse der Rollen angeordneten Kraftmessbolzen gemäß einer zweiten Ausführungsform der Erfindung.

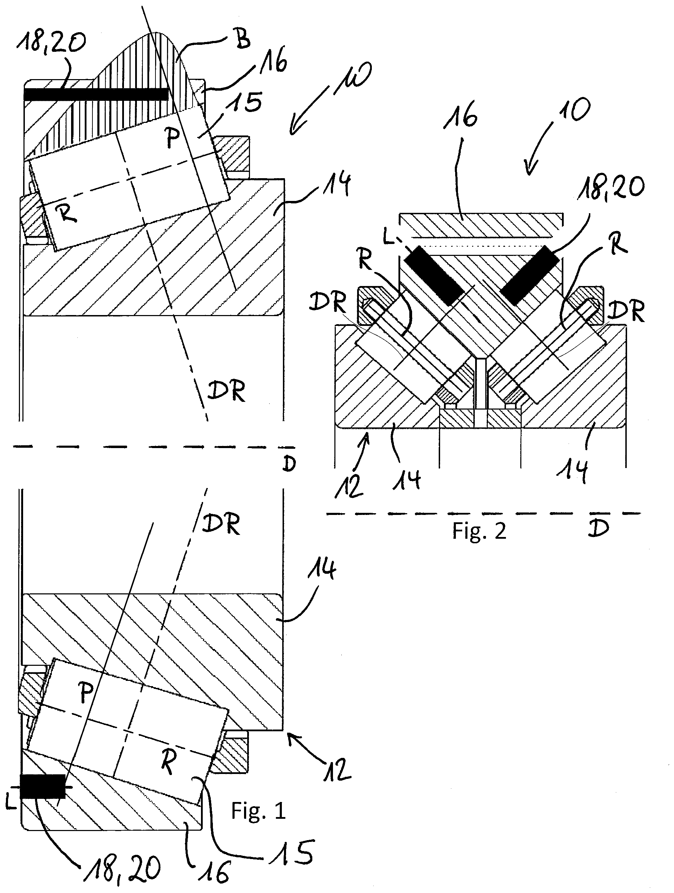

Die Figuren 1 und 2 zeigen jeweils eine Rollenlageranordnung 10 zum Bestimmen von Belastungen B an einem Rollenlager 12. Die konkret dargestellte Rollenlageranordnung 10 ist beispielhaft eine Kegelrollenlageranordnung. Das konkret dargestellte Rollenlager 12 ist beispielhaft ein Kegelrollenlager. Ebenso möglich sind Pendelrollenlageranordnungen mit Pendelrollenlagern, Zylinderrollenlageranordnungen mit Zylinderrollenlagern und ähnlich wirkende Lageranordnungen mit ähnlich wirkenden Lägern.

Hierzu weist die Rollenlageranordnung 10 auf
ein Rollenlager 12 mit zwei koaxialen Ringen 14, 16, nämlich einem Innenring 14 und einem Außenring 16, und mit einer Drehachse D, wobei zwischen dem Innenring 14 und dem Außenring 16 eine Vielzahl von Rollen 15 mit einer jeweiligen Rotationsachse R angeordnet ist, und wobei zumindest einer der Ringe 14, 16 zumindest eine Ausnehmung 18 zur Aufnahme eines Kraftmessbolzens 20 aufweist,

Weiterhin weist die Rollenlageranordnung 10 auf
zumindest einen Kraftmessbolzen 20, der jeweils in der Ausnehmung 18 aufgenommen ist, wobei sich der in der Ausnehmung 18 angeordnete Kraftmessbolzen 20 mit seiner Längsachse L zumindest teilweise entlang der Drehachse D des Rollenlagers 12 erstreckt.

Dabei erstrecken sich die zumindest eine Ausnehmung 18 und der mindestens eine Kraftmessbolzen 20 entlang der Längsachse L in einen mit einer Belastung B beaufschlagten Bereich des die mindestens eine Ausnehmung 18 aufweisenden Rings 14, 16 derart, dass zumindest eine zur Rotationsachse R der Rollen 15 senkrechte Projektionsvertikalebene P entlang dem Kraftmessbolzen 20 und einem Maximalbereich der Belastung B verläuft.

Eine schematische Darstellung der Projektionsvertikalebene P ist in Figur 1 dargestellt. Demgegenüber zeigen die Figuren 1 und 2 stets eine Achse DR des Druckwinkels der Rollen 15. Wie in Figur 1 dargestellt ist, deckt sich die Achse DR des Druckwinkels der Rollen 15 nicht mit dem Maximalbereich der Belastung B. Dies ist nur durch die zur Rotationsachse R der Rollen 15 senkrechte Projektionsvertikalebene P gegeben. Dabei kann es ausreichen, wenn der Kraftmessbolzen 20 mit einem Ende an der Projektionsvertikalebene P anliegt. Gemäß Figur 1 ist beispielhaft dargestellt, dass
das Rollenlager 12 an einem Außenring 16 eine Vielzahl von in Ausnehmungen 18 angeordneten Kraftmessbolzen 20 aufweist. Dabei sind beispielhaft mindestens zwei in den Ausnehmungen 18 angeordnete Kraftmessbolzen 20 entlang ihrer Längsachse L unterschiedlich lang ausgebildet.

Gemäß Figur 1 ist beispielhaft dargestellt, dass
mindestens zwei in den Ausnehmungen 18 angeordnete Kraftmessbolzen 20 am Außenring 16 umfangsgemäß verteilt angeordnet sind.

Insbesondere ist vorgesehen, dass
die zumindest eine Ausnehmung 18 zur Aufnahme eines Kraftmessbolzens 20 in einem zum Umfeld fixierten Ring 14, 16 angeordnet ist.

Weiterhin ist insbesondere vorgesehen, dass
an mindestens einem Ring 14, 16 mindestens vier Kraftmessbolzen 20 derart umfangsgemäß angeordnet und ausgebildet sind, dass jeweils zwei Kraftmessbolzen 20 zueinander gegenüberliegend entlang einer jeweiligen diagonalen Achse an dem mindestens einen Ring 14, 16 angeordnet sind.

Dabei verlaufen die beiden diagonalen Achsen vorzugsweise derart, dass eine diagonale Achse eine horizontale Achse ist und/oder die andere diagonale Achse eine vertikale Achse ist.

Gemäß Figur 1 ist beispielhaft dargestellt, dass
Am Außenring 16 mindestens zwei Kraftmessbolzen 20 derart umfangsgemäß angeordnet und ausgebildet sind, dass jeweils zwei Kraftmessbolzen 20 zueinander gegenüberliegend entlang einer jeweiligen diagonalen Achse an dem Außenring 16 angeordnet sind. Dabei verläuft die mindestens eine diagonale Achsen derart, dass sie eine vertikale Achse ist.

Insbesondere ist vorgesehen, dass
die mindestens beiden Kraftmessbolzen 20 entlang der als horizontale Achse ausgebildeten diagonalen Achse entlang ihrer Längsachse L die gleiche Länge aufweisen und/oder dass die mindestens beiden Kraftmessbolzen 20 entlang der als vertikale Achse ausgebildeten diagonalen Achse entlang ihrer Längsachse L die gleiche Länge aufweisen.

Weiterhin ist insbesondere vorgesehen, dass
die Länge des mindestens einen Kraftmessbolzens 20 entlang seiner Längsachse L von den mechanischen Eigenschaften des Rings 14, 16 abhängt, wobei die Länge des mindestens einen Kraftmessbolzens 20 entlang seiner Längsachse L bei einem Ring 14, 16 mit hoher Steifigkeit länger ausgebildet ist als bei einem Ring 14, 16 mit niedriger Steifigkeit.

Gemäß Figur 2 ist beispielhaft dargestellt, dass
die Längsachse L mindestens eines Kraftmessbolzens 20, vorzugsweise mehrerer Kraftmessbolzen 20, gewinkelt, insbesondere 45 Grad, zur Drehachse D des Rollenlagers 12 angeordnet ist beziehungsweise sind.

Gemäß Figur 2 ist weiterhin beispielhaft dargestellt, dass
die Längsachsen L mindestens zweier Kraftmessbolzens 20 derart gewinkelt zur Drehachse D des Rollenlagers 12 angeordnet sind, dass die Längsachsen L der mindestens beiden Kraftmessbolzens 20 parallel zur Rotationsachse R der Rollen 15 angeordnet sind.

Gemäß Figur 1 ist beispielhaft dargestellt, dass
die Längsachsen L mindestens zweier Kraftmessbolzens 20 parallel zur Drehachse D des Rollenlagers 12 angeordnet sind.

### Bezugszeichenliste

- 10: Rollenlageranordnung
- 12: Rollenlager
- 14: Innenring
- 15: Rolle
- 16: Außenring
- 18: Ausnehmung
- 20: Kraftmessbolzen

- D: Drehachse des Rollenlagers
- R: Rotationsachse der Rolle
- L: Längsachse des Kraftmessbolzens
- B: Mit einer Belastung beaufschlagten Bereich des die mindestens eine Ausnehmung aufweisenden Rings
- DR: Achse des Druckwinkels der Rolle

## Patentansprüche

1. Rollenlageranordnung (10) zum Bestimmen von Belastungen (B) an einem Rollenlager (12), aufweisend
- ein Rollenlager (12) mit zwei koaxialen Ringen (14, 16), nämlich einem Innenring (14) und einem Außenring (16), und mit einer Drehachse (D), wobei zwischen dem Innenring (14) und dem Außenring (16) eine Vielzahl von Rollen (15) mit einer jeweiligen Rotationsachse (R) angeordnet ist, und wobei zumindest einer der Ringe (14, 16) zumindest eine Ausnehmung (18) zur Aufnahme eines Kraftmessbolzens (20) aufweist,
- zumindest einen Kraftmessbolzen (20), der jeweils in der Ausnehmung (18) aufgenommen ist, wobei sich der in der Ausnehmung (18) angeordnete Kraftmessbolzen (20) mit seiner Längsachse (L) zumindest teilweise entlang der Drehachse (D) des Rollenlagers (12) erstreckt,
wobei sich eine Achse DR des Druckwinkels mindestens einer Rolle (15) nicht mit dem Maximalbereich einer Belastung (B) deckt,
- wobei sich die zumindest eine Ausnehmung (18) und der mindestens eine Kraftmessbolzen (20) entlang der Längsachse (L) in einen mit der Belastung (B) beaufschlagten Bereich des die mindestens eine Ausnehmung (18) aufweisenden Rings (14, 16) derart erstrecken, dass zumindest eine zur Rotationsachse (R) der Rollen (15) senkrechte Projektionsvertikalebene (P) entlang dem Kraftmessbolzen (20) und einem Maximalbereich der Belastung (B) verläuft.

2. Rollenlageranordnung (10) nach dem vorhergehenden Anspruch, **dadurch gekennzeichnet, dass**
das Rollenlager (12) an mindestens einem Ring (14, 16), vorzugsweise beiden Ringen (14, 16), eine Vielzahl von in Ausnehmungen (18) angeordneten Kraftmessbolzen (20) aufweist, wobei vorzugsweise mindestens zwei in den Ausnehmungen (18) angeordnete Kraftmessbolzen (20) entlang ihrer Längsachse (L) unterschiedlich lang ausgebildet sind, wobei bevorzugt mindestens zwei in den Ausnehmungen (18) angeordnete Kraftmessbolzen (20) an einem jeweiligen Ring (14, 16) umfangsgemäß verteilt angeordnet sind.

3. Rollenlageranordnung (10) nach dem vorhergehenden Anspruch, **dadurch gekennzeichnet, dass**
die zumindest eine Ausnehmung (18) zur Aufnahme eines Kraftmessbolzens (20) in einem zum Umfeld fixierten Ring (14, 16) angeordnet ist.

4. Rollenlageranordnung (10) nach Anspruch 2 oder 3, **dadurch gekennzeichnet, dass**
an mindestens einem Ring (14, 16) mindestens vier Kraftmessbolzen (20) derart angeordnet und ausgebildet sind, dass jeweils zwei Kraftmessbolzen (20) zueinander gegenüberliegend entlang einer jeweiligen diagonalen Achse an dem mindestens einen Ring (14, 16) angeordnet sind, wobei die beiden diagonalen Achsen vorzugsweise derart verlaufen, dass eine diagonale Achse eine horizontale Achse ist und/oder die andere diagonale Achse eine vertikale Achse ist.

5. Rollenlageranordnung (10) nach dem vorhergehenden Anspruch, **dadurch gekennzeichnet, dass**
die mindestens beiden Kraftmessbolzen (20) entlang der als horizontale Achse ausgebildeten diagonalen Achse entlang ihrer Längsachse (L) die gleiche Länge aufweisen und/oder dass die mindestens beiden Kraftmessbolzen (20) entlang der als vertikale Achse ausgebildeten diagonalen Achse entlang ihrer Längsachse (L) die gleiche Länge aufweisen.

6. Rollenlageranordnung (10) nach mindestens einem der vorhergehenden Ansprüche, **dadurch gekennzeichnet, dass**
die Länge des mindestens einen Kraftmessbolzens (20) entlang seiner Längsachse (L) von den mechanischen Eigenschaften des Rings (14, 16) abhängt, wobei die Länge des mindestens einen Kraftmessbolzens (20) entlang seiner Längsachse (L) bei einem Ring (14, 16) mit hoher Steifigkeit länger ausgebildet ist als bei einem Ring (14, 16) mit niedriger Steifigkeit.

7. Rollenlageranordnung (10) nach mindestens einem der vorhergehenden Ansprüche, **dadurch gekennzeichnet, dass**
die Längsachse (L) mindestens eines Kraftmessbolzens (20), vorzugsweise mehrerer Kraftmessbolzen (20), gewinkelt, insbesondere 45 Grad, zur Drehachse (D) des Rollenlagers (12) angeordnet ist beziehungsweise sind.

8. Rollenlageranordnung (10) nach dem vorhergehenden Anspruch, **dadurch gekennzeichnet, dass**
die Längsachse (L) mindestens eines Kraftmessbolzens (20), vorzugsweise mehrerer Kraftmessbolzen (20), derart gewinkelt zur Drehachse (D) des Rollenlagers (12) angeordnet ist beziehungsweise sind, dass die Längsachse (L) mindestens eines Kraftmessbolzens (20), vorzugsweise mehrerer Kraftmessbolzen (20) parallel zur Rotationsachse (R) der Rollen (15) angeordnet ist beziehungsweise sind.

9. Rollenlageranordnung (10) nach mindestens einem der vorhergehenden Ansprüche, **dadurch gekennzeichnet, dass**
die Längsachse (L) mindestens eines Kraftmessbolzens (20), vorzugsweise mehrerer Kraftmessbolzen (20), parallel zur Drehachse (D) des Rollenlagers (12) angeordnet ist beziehungsweise sind.

## Claims

1. A roller bearing assembly (10) for determining loads (B) on a roller bearing (12), having
- a roller bearing (12) with two coaxial rings (14, 16), namely an inner ring (14) and an outer ring (16), and with a rotational axis (D), wherein a plurality of rollers (15) with a respective axis of rotation (R) is arranged between the inner ring (14) and the outer ring (16), and wherein at least one of the rings (14, 16) has at least one recess (18) for receiving a force measuring pin (20),
- at least one force measuring pin (20), which is received in the recess (18) in each case, wherein the force measuring pin (20) arranged in the recess (18) extends with its longitudinal axis (L) at least partially along the rotational axis (D) of the roller bearing (12),
wherein an axis DR of the contact angle of at least one roller (15) does not coincide with the maximum region of a load (B),
- wherein the at least one recess (18) and the at least one force measuring pin (20) extend along the longitudinal axis (L) into a region of the ring (14, 16) having the at least one recess (18), which region is acted upon by the load (B), in such a way that at least one projection vertical plane (P) perpendicular to the axis of rotation (R) of the rollers (15) runs along the force measuring pin (20) and a maximum region of the load (B).

2. The roller bearing assembly (10) according to the preceding claim, **characterized in that** the roller bearing (12) has on at least one ring (14, 16), preferably both rings (14, 16), a plurality of force measuring pins (20) arranged in recesses (18), wherein preferably at least two force measuring pins (20) arranged in the recesses (18) are designed with different lengths along their longitudinal axis (L), wherein preferably at least two force measuring pins (20) arranged in the recesses (18) are arranged circumferentially distributed on a respective ring (14, 16).

3. The roller bearing assembly (10) according to the preceding claim, **characterized in that** the at least one recess (18) for receiving a force measuring pin (20) is arranged in a ring (14, 16) fixed to the surroundings.

4. The roller bearing assembly (10) according to claim 2 or 3, **characterized in that**
at least four force measuring pins (20) are arranged and formed on at least one ring (14, 16) in such a way that in each case two force measuring pins (20) are arranged opposite one another along a respective diagonal axis on the at least one ring (14, 16), wherein the two diagonal axes preferably run in such a way that one diagonal axis is a horizontal axis and/or the other diagonal axis is a vertical axis.

5. The roller bearing assembly (10) according to the preceding claim, **characterized in that** the at least two force measuring pins (20) have the same length along the diagonal axis formed as a horizontal axis along their longitudinal axis (L) and/or that the at least two force measuring pins (20) have the same length along the diagonal axis formed as a vertical axis along their longitudinal axis (L).

6. The roller bearing assembly (10) according to at least one of the preceding claims, **characterized in that**
the length of the at least one force measuring pin (20) along its longitudinal axis (L) depends on the mechanical properties of the ring (14, 16), wherein the length of the at least one force measuring pin (20) along its longitudinal axis (L) is designed to be longer in the case of a ring (14, 16) with high rigidity than in the case of a ring (14, 16) with low rigidity.

7. The roller bearing assembly (10) according to at least one of the preceding claims, **characterized in that**
the longitudinal axis (L) of at least one force measuring pin (20), preferably several force measuring pins (20), is/are arranged at an angle, in particular 45 degrees, to the rotational axis (D) of the roller bearing (12).

8. The roller bearing assembly (10) according to the preceding claim, **characterized in that** the longitudinal axis (L) of at least one force measuring pin (20), preferably several force measuring pins (20), is arranged at an angle to the rotational axis (D) of the roller bearing (12) in such a way that the longitudinal axis (L) of at least one force measuring pin (20), preferably several force measuring pins (20), is arranged parallel to the axis of rotation (R) of the rollers (15).

9. The roller bearing assembly (10) according to at least one of the preceding claims, **characterized in that**
the longitudinal axis (L) of at least one force measuring pin (20), preferably several force measuring pins (20), is arranged parallel to the rotational axis (D) of the roller bearing (12).

## Revendications

1. Assemblage de roulements à rouleaux (10) pour la détermination de charges (B) sur un roulement à rouleaux (12), présentant
- un roulement à rouleaux (12) avec deux bagues coaxiales (14, 16), à savoir une bague intérieure (14) et une bague extérieure (16) et comportant un axe de rotation (D), dans lequel est disposé, entre la bague intérieure (14) et la bague extérieure (16), une pluralité de rouleaux (15) avec un axe de rotation respectif (R) et dans lequel au moins une des bagues (14, 16) présente au moins un évidement (18) pour recevoir un axe dynamométrique (20),
- au moins un axe dynamométrique (20) respectivement logé dans l'évidement (18), l'axe dynamométrique (20) disposé dans l'évidement (18) s'étendant avec son axe longitudinal (L) au moins partiellement le long de l'axe de rotation (D) du roulement à rouleaux (12),
dans lequel un axe DR de l'angle de pression d'au moins un rouleau (15) ne coïncide pas avec la plage maximale d'une charge (B),
- dans lequel l'au moins un évidement (18) et l'au moins un axe dynamométrique (20) s'étendent le long de l'axe longitudinal (L) dans une région de la bague (14, 16) présentant l'au moins un évidement (18) qui est soumis à la charge (B) de sorte qu'au moins un plan vertical de projection (P) perpendiculaire à l'axe de rotation (R) des rouleaux (15) longe l'axe dynamométrique (20) et une plage maximale de la charge (B).

2. Assemblage de roulements à rouleaux (10) selon la revendication précédente, **caractérisé en ce que**
le roulement à rouleaux (12) présente sur au moins une bague (14, 16), de préférence les deux bagues (14, 16), une pluralité d'axes dynamométriques (20) disposés dans des évidements (18), de préférence au moins deux axes dynamométriques (20) disposés dans les évidements (18) sont formés de longueurs différentes le long de leur axe longitudinal (L), de préférence au moins deux axes dynamométriques (20) disposés dans les évidements (18) étant répartis de manière circonférentielle sur une bague respective (14, 16).

3. Assemblage de roulements à rouleaux (10) selon la revendication précédente, **caractérisé en ce que**
l'au moins un évidement (18) servant à recevoir un axe dynamométrique (20) est disposé dans une bague (14, 16) fixée par rapport à l'environnement.

4. Assemblage de roulements à rouleaux (10) selon la revendication 2 ou 3, **caractérisé en ce que**
au moins quatre axes dynamométriques (20) sont disposés et formés sur au moins une bague (14, 16) de telle manière que deux axes dynamométriques (20) respectifs soient disposés en face l'un de l'autre le long d'un axe diagonal respectif sur l'au moins une bague (14, 16), les deux axes diagonaux s'étendant de préférence de telle sorte qu'un axe diagonal soit un axe horizontal et/ou que l'autre axe diagonal soit un axe vertical.

5. Assemblage de roulements à rouleaux (10) selon la revendication précédente, **caractérisé en ce que**
les au moins deux axes dynamométriques (20) le long de l'axe diagonal formé comme un axe horizontal présentent la même longueur le long de leur axe longitudinal (L) et/ou que les au moins deux axes dynamométriques (20) présentent la même longueur le long de l'axe diagonal formé comme un axe vertical le long de leur axe longitudinal (L).

6. Agencement de roulement à rouleaux (10) selon au moins l'une des revendications précédentes, **caractérisé en ce que**
la longueur de l'au moins un axe dynamométrique (20) le long de son axe longitudinal (L) dépend des propriétés mécaniques de la bague (14, 16), la longueur de l'au moins un axe dynamométrique (20) le long de son axe longitudinal (L) étant formée plus longue pour une bague (14, 16) de grande rigidité que pour une bague (14, 16) de faible rigidité.

7. Agencement de roulement à rouleaux (10) selon au moins l'une des revendications précédentes, **caractérisé en ce que**
l'axe longitudinal (L) d'au moins un axe dynamométrique (20), de préférence de plusieurs axes dynamométriques (20), est ou sont disposé(s) selon un angle, en particulier de 45 degrés, par rapport à l'axe de rotation (D) du roulement à rouleaux (12).

8. Assemblage de roulements à rouleaux (10) selon la revendication précédente, **caractérisé en ce que**
l'axe longitudinal (L) d'au moins un axe dynamométrique (20), de préférence de plusieurs axes dynamométriques (20), est ou sont disposé(s) selon un angle par rapport à l'axe de rotation (D) du roulement à rouleaux (12) de telle sorte que l'axe longitudinal (L) d'au moins un axe dynamométrique (20), de préférence de plusieurs axes dynamométriques (20), soit ou soient disposé(s) parallèlement à l'axe de rotation (R) des rouleaux (15).

9. Agencement de roulement à rouleaux (10) selon au moins l'une des revendications précédentes, **caractérisé en ce que**
l'axe longitudinal (L) d'au moins un axe dynamométrique (20), de préférence de plusieurs axes dynamométriques (20), est ou sont disposé(s) parallèlement à l'axe de rotation (D) du roulement à rouleaux (12).
